# EUROPÄISCHE PATENTSCHRIFT

(11) **EP 1 602 603 B1**
(45) Veröffentlichungstag und Bekanntmachung des Hinweises auf die Patenterteilung: **21.12.2005**
(21) Anmeldenummer: 04012821.7
(22) Anmeldetag: 29.05.2004
(51) Int. Cl.: B65G 47/252, B65G 47/08

(54) **Vorrichtung und Verfahren zum Gruppieren von Gegenständen**
Device and method for forming groups of products
Dispositif et procédé pour former des groupes d'objets

(43) Veröffentlichungstag der Anmeldung: 07.12.2005
(73) Patentinhaber: ROVEMA VERPACKUNGSMASCHINEN GMBH, 35463 Fernwald (DE)
(72) Erfinder: Kammler, Roman, Dr., 67547 Worms (DE); Baur, Walter, Dr., 63584 Gründau (DE)

(56) Entgegenhaltungen:
- EP-A- 0 654 407
- US-A- 5 094 338

## Beschreibung

Die Anmeldung betrifft eine Vorrichtung und ein Verfahren zum Gruppieren von Gegenständen, insbesondere von Packungen, welche von einer Transporteinrichtung einer Gruppiereinheit zugeführt werden, um dort eine Gruppe von Gegenständen zu bilden. Diese Gruppe kann dann auf unterschiedliche Weise verpackt werden. So kann sie z. B. in einen Karton gesetzt werden oder auf ein Tray. Es können auch mehrere Gruppen aufeinander in einen Karton gebracht werden, um den Karton mit mehreren Lagen von Gegenständen zu befüllen. Es ist insbesondere üblich, mehrere Lagen von befüllten Faltschachteln in einen Karton zu bringen. Dabei kann eine Lage aus einer einzigen Gruppe von Faltschachteln bestehen. Es können aber auch zwei oder mehr Gruppen nebeneinander gesetzt werden, um eine Lage zu bilden. Eine derartige Vorrichtung zum Gruppieren von Gegenständen ist bereits aus EP-A-654407 bekannt.

Es ist bekannt, jeweils eine bestimmte Anzahl an Faltschachteln, die von einem Förderband zugeführt werden, an einer Gruppiereinheit zu stauen. Die dadurch erzeugte Gruppe wird mittels eines von oben auf die Gruppe gesetzten Greifers angehoben und in einen Karton gesetzt. Die Faltschachteln werden dabei bezüglich ihrer Ausrichtung nicht verändert. Aufrecht stehende Faltschachteln gelangen aufrecht in den Karton. Im Falle einer Zuführung liegender Faltschachteln werden Lagen bzw. Gruppen erzeugt, bei denen die Faltschachteln liegend in den Karton gelangen.

Die bekannte Technik hat den Nachteil, dass die mit einer bestimmten Ausrichtung ankommenden Gegenstände nicht wahlweise in dieser oder in einer anderen Ausrichtung in einen Karton gesetzt werden können.

Der Erfindung liegt die Aufgabe zu Grunde, diesen Nachteil zu beseitigen.

Gelöst ist diese Aufgabe gemäß den Ansprüchen 1 und 10. Danach weist eine Transporteinrichtung, welche Gegenstände zuführt, in einer über einer Gruppiereinheit befindlichen Höhe eine Abwurfstelle zum nacheinander Abwerfen der Gegenstände auf die Gruppiereinheit auf. Die Gruppiereinheit wird relativ zur Abwurfstelle derart bewegt, dass die Gegenstände nacheinander auf die Gruppiereinheit gelangen, um dort eine Gruppe von Gegenständen zu bilden. Eine Steuereinrichtung ist dazu vorgesehen, die Gruppereinheit jeweils um den Betrag einer dort vorhandenen horizontalen Gegenstandserstreckung weiterzubewegen, so dass die Gegenstände nebeneinander auf der Gruppiereinheit landen und so die Gruppe bilden.

Ein Antrieb der Transporteinrichtung ist wahlweise derart bezüglich der Transportgeschwindigkeit ansteuerbar, dass die Gegenstände entweder mit relativ hoher horizontaler Abwurfgeschwindigkeit an der Abwurfstelle über eine nach unten gerichtete Krümmung abgeworfen werden, um in gleicher Ausrichtung auf der Gruppiereinheit zu landen, wie ihre Ausrichtung auf der Transporteinrichtung war, insbesondere liegend, oder mit relativ niedriger horizontaler Abwurfgeschwindigkeit abgeworfen werden, um verursacht durch die Krümmung zunächst eine 90 Grad-Drehung um den eigenen Schwerpunkt um 90 Grad auszuführen, und um dann derart gedreht, insbesondere stehend, auf der Gruppiereinheit zu landen.

Die Erfindung hat den Vorteil, dass durch eine vorgewählte Transportgeschwindigkeit bestimmt werden kann, ob ein liegend ankommender Gegenstand liegend oder stehend gruppiert wird. Entweder ist der Gegenstand so schnell, dass er die Krümmung in horizontaler Richtung passiert, ohne dass diese auf ihn wirken kann. Dann behält er seine Ausrichtung. Oder er ist relativ langsam und führt somit eine Bewegung aus, bei welcher er über die Krümmung rutscht oder entlang dieser weitertransportiert wird. Dann erfährt er eine Schwenkbewegung, welche ihn um 90 Grad um den eigenen Schwerpunkt dreht, bevor er auf der Gruppiereinheit landet. Während also liegend ankommende Packungen mit hoher horizontaler Geschwindigkeitskomponente zur Gruppiereinheit befördert werden, um dort liegend anzukommen, ist diese Beförderungsgeschwindigkeit für Packungen, die liegend ankommen und stehend an der Gruppiereinheit landen sollen, geringer. Dies führt in letzterem Fall nicht zu einer geringeren Verpackungsgeschwindigkeit, wenn man den Abstand zwischen den einzelnen ankommenden Packungen verringert.

Vorteilhafte Ausgestaltungen der erfindungsgemäßen Vorrichtung sind in den Ansprüchen 2 bis 9 beschrieben.

Die Krümmung an der Abwurfstelle ist einfach und kostengünstig zu realisieren, wenn gemäß Anspruch 2 die Transporteinrichtung ein umlaufendes Förderband ist, welches an der Abwurfstelle an einer Umlenkrolle um 180 Grad umgelenkt wird. Dabei entspricht die Krümmung der Umlenkrolle bzw. der umgelenkten Transporteinrichtung den Anforderungen an eine Krümmung zum Drehen eines Gegenstandes.

Da bei der vorgeschlagenen Vorrichtung die Auftreffstelle der Gegenstände auf der Gruppiereinheit im Regelfall gleich ist, kann eine Gruppe von dicht nebeneinander positionierten Gegenständen in sicherer Weise erreicht werden, wenn die Gruppiereinheit einen in horizontaler Richtung verfahrbaren Rahmen enthält, welcher vorzugsweise an einem von der Abwurfstelle weg gelegenen Ende eine Begrenzung aufweist (Anspruch 3). Der Rahmen wird zur Aufnahme jeweils eines Gegenstandes um eine Gegenstandsbreite weitergefahren. Die Begrenzung stützt die erzeugte Gruppe ab. Eine entsprechende Abstützung wird am gegenüberliegenden Ende der Gruppe erreicht, wenn gemäß Anspruch 4 an dem zur Abwurfstelle hin gelegenen Ende des Rahmens eine weitere Begrenzung vorgesehen ist. Ist diese zweite Begrenzung zu der ersten Begrenzung hin verstellbar, so kann eine fertiggestellte Gruppe vorübergehend zwischen den beiden Begrenzungen eng zusammengehalten werden, bis sie weitergefördert wird.

Ein geeigneter Antrieb für die Gruppiereinheit ist ein Linearantrieb, vorzugsweise ein Linearmotor (Anspruch 5). Dieser kann die Gruppiereinheit jeweils um eine Gegenstandsbreite versetzen. Ein sehr schneller und ortgenauer Antrieb enthält einen Linearmotor mit einem entlang einer Führung beweglichen Schlitten, wobei der Rahmen der Gruppiereinheit mit dem Schlitten verbunden ist (Anspruch 6).

Die vorgeschlagene Vorrichtung kann schneller und sicherer betrieben werden, wenn analog Anspruch 7 an der Abwurfstelle ein Positionsdetektor zum Erkennen eines Abwurfvorganges vorgesehen ist. Diese Detektion dient in erster Linie einem zeitgenauen Verfahren der Gruppiereinheit oder einer Feststellung eines ausbleibenden Gegenstandes. Ein derartiges Ausbleiben wird bei der Gruppierung berücksichtigt.

Eine sichere Gruppenbildung und -handhabung wird auch erreicht, wenn die Gruppiereinheit zwei parallel zueinander verlaufende Transportbänder aufweist, welche jeweils mittels eines Antriebs angetrieben werden, und jeweils eine Begrenzung zum Begrenzen einer Gruppe über eine Befestigung an den Transportbändern vorgesehen ist (Anspruch 8). Dann kann die fertiggestellte Gruppe sicher zwischen den Begrenzungen gehalten werden. Folgt einer derartigen Gruppiereinheit in Transportrichtung nachgeordnet ein weiterer Förderer, wobei der Spalt zwischen der Gruppiereinheit und dem Förderer mit einem Abdeckblech versehen ist, über das die Gegenstände geschoben werden können (Anspruch 9), so kann die erzeugte Gruppe sicher über das Abdeckblech auf den Förderer geschoben und weitergefördert werden.

Im folgenden wird die Erfindung an Hand zwei Ausführungsbeispiele darstellender Figuren näher beschrieben. Es zeigt:
- Figur 1: in einer Seitenansicht eine Vorrichtung zum Gruppieren, mit der liegend auf einem Förderband ankommende Packungen mit hoher Geschwindigkeit an einer Abwurfstelle in horizontaler Richtung abgeworfen werden, um liegend und nebeneinander auf einer schrittweise verfahrbaren, tiefer liegenden Gruppiereinheit zu landen;
- Figur 2: in einer Seitenansicht die Vorrichtung der Figur 1, wobei die liegend auf dem Förderband ankommenden Packungen mit einer niedrigen Geschwindigkeit abgeworfen werden, um entlang einer Krümmung einer Umlenkrolle des Förderbandes um 90 Grad gedreht zu werden, und um aufrecht stehend auf der Gruppiereinheit zu landen;
- Figur 3: in einer Seitenansicht ein weiteres Ausführungsbeispiel mit einer Gruppiereinheit, welche zwei separat angetriebene, parallel zueinander ausgerichtete Transportbänder enthält, sowie
- Figur 4: in einer Ansicht von oben die Vorrichtung der Figur 3.

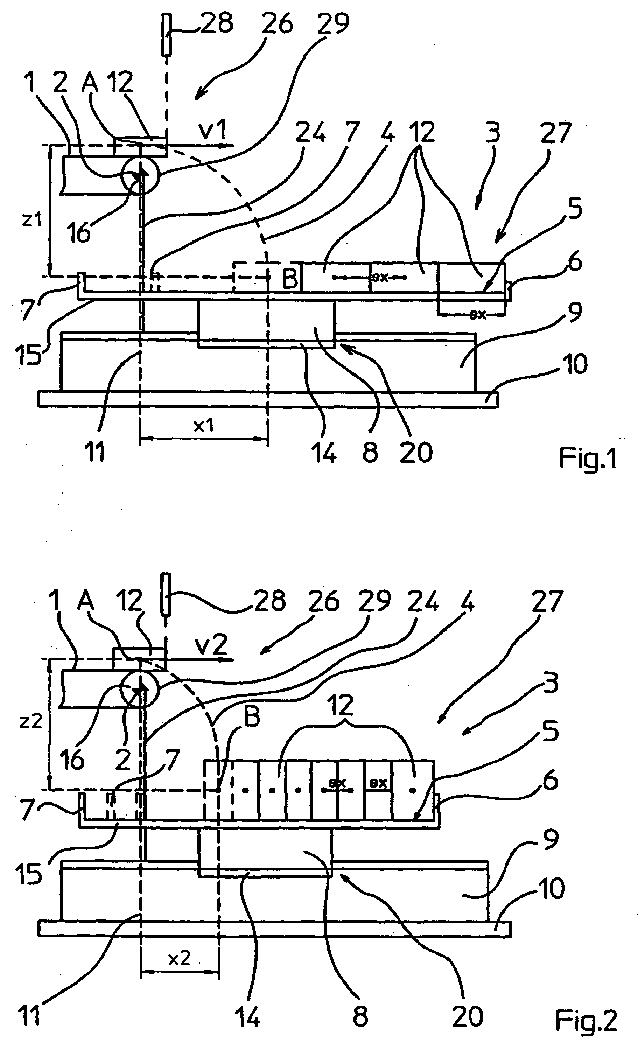

Bei einer Vorrichtung zum Gruppieren von Packungen 12 dient eine Transporteinrichtung 1 mit einem Antrieb 2 zum Zuführen der Gegenstände zu einer Gruppiereinheit 3 (Figur 1 und 2). Die Transporteinrichtung 1 weist in einer über der Gruppiereinheit 3 befindlichen Höhe eine Abwurfstelle 26 zum nacheinander Abwerfen der Packungen 12 auf die Gruppiereinheit 3 auf. Die Gruppiereinheit 3 hat einen Antrieb 20 zum Bewegen der Gruppiereinheit 3, nach rechts und somit weg von der Abwurfstelle 26. Die Gruppiereinheit 3 wird derart bewegt, dass die Gegenstände nacheinander auf die Gruppiereinheit 3 gelangen, um dort eine Gruppe 27 von Packungen 12 zu bilden. Eine Steuereinrichtung 14 ist mit den beiden Antrieben 2, 20 verbunden, um die Gruppiereinheit 3 jeweils um den Betrag einer dort vorhandenen horizontalen Gegenstandserstreckung sx weiterzubewegen, so dass die Packungen 12 nebeneinander auf der Gruppiereinheit 3 landen und so die Gruppe 27 bilden. Der Antrieb 2 der Transporteinrichtung 1 ist bezüglich der Transportgeschwindigkeit ansteuerbar, dass die Gegenstände mit relativ hoher horizontaler Abwurfgeschwindigkeit (V1) an der Abwurfstelle 26 über eine nach unten gerichtete Krümmung 29 abgeworfen werden, um in gleicher, nämlich liegender Ausrichtung auf der Gruppiereinheit 3 zu landen, wie ihre Ausrichtung auf der Transporteinrichtung 1 war (Figur 1). Die Packungen 12 können auch mit relativ niedriger horizontaler Abwurfgeschwindigkeit (V2) abgeworfen werden, um verursacht durch die Krümmung 29, zunächst eine 90 Grad-Drehung um den eigenen Schwerpunkt um 90 Grad auszuführen, und um dann derart gedreht, stehend auf einem Boden 5 der Gruppiereinheit 3 zu landen (Figur 2). In beiden Fällen wird die Gruppiereinrichtung 3 um eine Gegenstandserstreckung sx nach rechts bewegt, damit eine enge Gruppe 27 erreicht wird. Ein Bahnpunkt A, der dem Schwerpunkt einer Packung 12 entspricht, beschreibt während des Wurfes eine Wurfbahn 4 und wird zum Bahnpunkt B, der die auf der Gruppiereinheit 3 ruhende Packung 12 beschreibt. Eine entsprechende horizontale Abwurfgeschwindigkeit V1, V2 führt unter Berücksichtigung einer vorgegebenen, theoretischen Fallstrecke 11 bei einer bestimmten Fallhöhe Z1, Z2 zu einer bestimmten Wurfweite X1, X2.

Die Transporteinrichtung 1 ist ein umlaufendes Förderband, welches an der Abwurfstelle 26 an einer Umlenkrolle 16 um 180 Grad umgelenkt wird, und im oberen rechten Bereich der Umlenkrolle 16 die Krümmung 29 ausbildet. Die Gruppiereinheit 3 enthält einen in horizontaler Richtung verfahrbaren Rahmen 15, welcher an einem von der Abwurfstelle 26 weg gelegenen Ende eine Begrenzung 6 zum Halten der Gruppe 27 aufweist. An dem zur Abwurfstelle 26 hin gelegenen Ende des Rahmens 15 ist eine weitere Begrenzung 7 vorgesehen, welche zur anderen Begrenzung 6 hin verstellbar ist, um eine fertiggestellte Gruppe 27 zu halten. Als Antrieb 20 für die Gruppiereinheit 3 dient ein Linearantrieb, der als Linearmotor ausgestaltet ist. Der Linearmotor enthält einen entlang einer Führung 9 beweglichen Schlitten 8, wobei der Rahmen 15 der Gruppiereinheit 3 mit dem Schlitten 8 verbunden ist. Die Führung 9 ist auf einer Montageplatte 10 befestigt.

An der Abwurfstelle 26 ist ein Positionsdetektor 28 zum Erkennen eines Abwurfvorganges vorgesehen. Dieser ist ebenso wie der Antrieb 2 über eine Leitung 24 mit der Steuereinrichtung 14 und dem Antrieb 20 verbunden. Derart wird die Gruppiereinheit 3 mit jeder ankommenden Packung 12 um eine Gegenstandserstreckung sx nach rechts verfahren, bis die Gruppe 27 komplett ist. Beim Gruppierverfahren zur Figur 2 ist eine kleinere Gegenstandserstreckung sx gegeben, da die Packungen 12 aufrecht stehend auf den Boden 5 gelangen. Die Wurfbahn 4 ist hier steiler, da die Abwurfgeschwindigkeit V2 relativ gering ist, um den Packungen 12 eine Schwenkbewegung um die Drehachse der Umlenkrolle 16 zu ermöglichen.

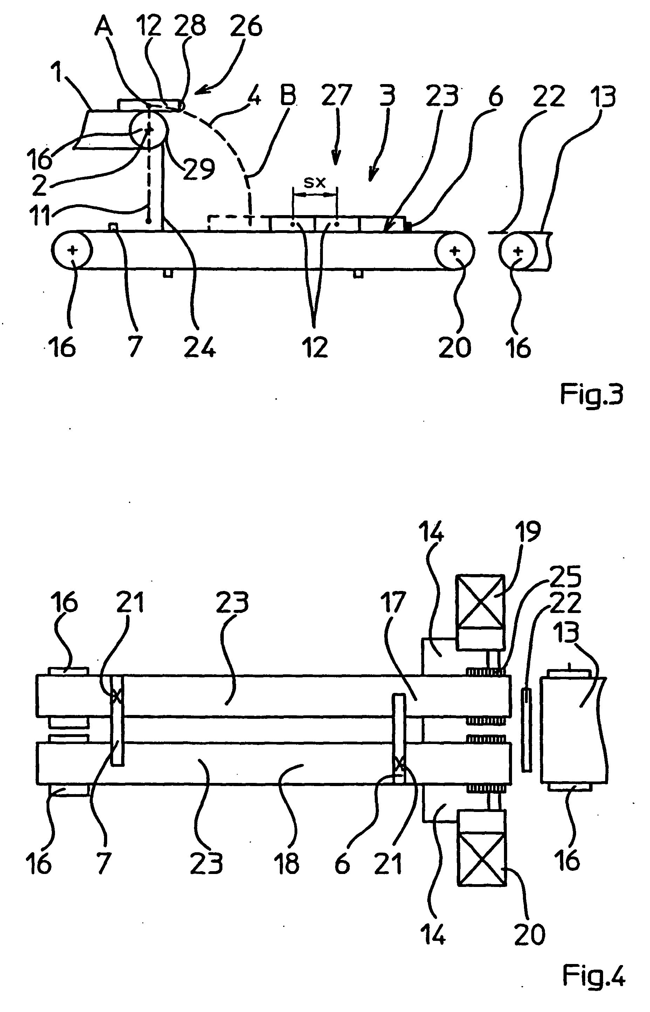

Beim Ausführungsbeispiel der Figuren 3 und 4 weist die Gruppiereinheit 3 zwei parallel zueinander verlaufende Transportbänder 23 auf, welche jeweils mittels eines Antriebs 19, 20 angetrieben werden. Jeweils eine Begrenzung 6, 7 zum Begrenzen einer Gruppe 27 ist über eine Befestigung 21 an den Transportbändern 23 vorgesehen. Die Transportbänder 23 sind zu ihrer Innenseite hin als Transportgurt 17, 18 mit einer Innenverzahnung ausgeführt, und werden über Zahnräder 25 separat von den als Servomotoren ausgeführten Antrieben 19, 20 angetrieben, damit eine fertiggestellte Gruppe 27, von den Begrenzungen 6, 7 gehalten, nach rechts gesetzt werden kann. Der Gruppiereinheit 3 in Transportrichtung nachgeordnet folgt ein weiterer Förderer 13. Der Spalt zwischen der Gruppiereinheit 3 und dem Förderer 13 ist mit einem Abdeckblech 22 versehen, über das die Packungen 12 unter Nutzung der linken Begrenzung 7 geschoben werden. Die Antriebe 2, 19, 20 und ein Positionsdetektor 28 sind über eine Leitung 24 mit einer Steuereinrichtung 14 verbunden, damit alle Bewegungsabläufe miteinander korreliert werden.
- A, B: Bahnpunkt
- sx: horizontale Gegenstandserstreckung
- V1, V2: horizontale Abwurfgeschwindigkeit
- X1, X2: Wurfweite
- Z1, Z2: Fallhöhe
- 1: Transporteinrichtung
- 2: Antrieb
- 3: Gruppiereinheit
- 4: Wurfbahn
- 5: Boden
- 6, 7: Begrenzung
- 8: Schlitten
- 9: Führung
- 10: Montageplatte
- 11: Fallstrecke
- 12: Packung
- 13: Förderer
- 14: Steuereinrichtung
- 15: Rahmen
- 16: Umlenkrolle
- 17, 18: Transportgurt mit Innenverzahnung
- 19, 20: Antrieb
- 21: Befestigung
- 22: Abdeckblech
- 23: Transportband
- 24: Leitung
- 25: Zahnrad
- 26: Abwurfstelle
- 27: Gruppe
- 28: Positionsdetektor
- 29: Krümmung

## Patentansprüche

1. Vorrichtung zum Gruppieren von Gegenständen, insbesondere von Packungen (12), mit einer Transporteinrichtung (1) mit einem Antrieb (2) zum Zuführen der Gegenstände zu einer Gruppiereinheit (3), **dadurch gekennzeichnet, dass** die Transporteinrichtung (1) in einer über der Gruppiereinheit (3) befindlichen Höhe eine Abwurfstelle (26) zum nacheinander Abwerfen der Gegenstände auf die Gruppiereinheit (3) aufweist, dass die Gruppiereinheit (3) einen Antrieb (20) zum Bewegen der Gruppiereinheit (3), vorzugsweise weg von der Abwurfstelle (26) aufweist, wobei die Gruppiereinheit (3) derart bewegbar ist, dass die Gegenstände nacheinander auf die Gruppiereinheit (3) gelangen, um dort eine Gruppe (27) von Gegenständen zu bilden, und dass eine Steuereinrichtung (14) vorgesehen ist, welche mit den beiden Antrieben (2, 20) verbunden ist, um die Gruppiereinheit (3) jeweils um den Betrag einer dort vorhandenen horizontalen Gegenstandserstreckung (sx) weiterzubewegen, so dass die Gegenstände nebeneinander auf der Gruppiereinheit (3) landen und so die Gruppe (27) bilden, und dass der Antrieb (2) der Transporteinrichtung (1) wahlweise derart bezüglich der Transportgeschwindigkeit ansteuerbar ist, dass die Gegenstände entweder mit relativ hoher horizontaler Abwurfgeschwindigkeit (V1) an der Abwurfstelle (26) über eine nach unten gerichtete Krümmung (29) abgeworfen werden, um in gleicher Ausrichtung auf der Gruppiereinheit (3) zu landen, wie ihre Ausrichtung auf der Transporteinrichtung (1) war, insbesondere liegend, oder mit relativ niedriger horizontaler Abwurfgeschwindigkeit (V2) abgeworfen werden, um, verursacht durch die Krümmung (29), zunächst eine 90 Grad-Drehung um den eigenen Schwerpunkt um 90 Grad auszuführen, und um dann derart gedreht, insbesondere stehend, auf der Gruppiereinheit (3) zu landen.

2. Vorrichtung nach Anspruch 1, **dadurch gekennzeichnet, dass** die Transporteinrichtung (1) ein umlaufendes Förderband ist, welches an der Abwurfstelle (26) an einer Umlenkrolle (16) um 180 Grad umgelenkt wird.

3. Vorrichtung nach Anspruch 1 oder Anspruch 2, **dadurch gekennzeichnet, dass** die Gruppiereinheit (3) einen in horizontaler Richtung verfahrbaren Rahmen (15) enthält, welcher vorzugsweise an einem von der Abwurfstelle (26) weg gelegenen Ende eine Begrenzung (6) aufweist.

4. Vorrichtung nach Anspruch 3, **dadurch gekennzeichnet, dass** an dem zur Abwurfstelle (26) hin gelegenen Ende des Rahmens (15) eine weitere Begrenzung (7) vorgesehen ist, welche vorzugsweise zur anderen Begrenzung (6) hin verstellbar ist.

5. Vorrichtung nach einem der Ansprüche 1 bis 4, **dadurch gekennzeichnet, dass** als Antrieb (20) für die Gruppiereinheit (3) ein Linearantrieb, vorzugsweise ein Linearmotor vorgesehen ist.

6. Vorrichtung nach Anspruch 5, **dadurch gekennzeichnet, dass** der Antrieb (20) ein Linearmotor mit einem entlang einer Führung (9) beweglichen Schlitten (8) enthält, wobei der Rahmen (15) der Gruppiereinheit (3) mit dem Schlitten (8) verbunden ist.

7. Vorrichtung nach Anspruch 1, **dadurch gekennzeichnet, dass** an der Abwurfstelle (26) ein Positionsdetektor (28) zum Erkennen eines Abwurfvorganges vorgesehen ist.

8. Vorrichtung nach Anspruch 1, Anspruch 2 oder Anspruch 7, **dadurch gekennzeichnet, dass** die Gruppiereinheit (3) zwei parallel zueinander verlaufende Transportbänder (23) aufweist, welche jeweils mittels eines Antriebs (19, 20) angetrieben werden, und dass jeweils eine Begrenzung (6, 7) zum Begrenzen einer Gruppe (27) über eine Befestigung (21) an den Transportbändern (23) vorgesehen ist.

9. Vorrichtung nach Anspruch 8, **dadurch gekennzeichnet, dass** der Gruppiereinheit (3) in Transportrichtung nachgeordnet ein weiterer Förderer (13) folgt, wobei der Spalt zwischen der Gruppiereinheit (3) und dem Förderer (13) mit einem Abdeckblech (22) versehen ist, über das die Gegenstände geschoben werden können.

10. Verfahren zum Gruppieren von Gegenständen, insbesondere von Packungen (12), wobei die Gegenstände liegend in horizontaler Richtung nacheinander an eine Abwurfstelle (26) transportiert, und dort in horizontaler Richtung abgeworfen werden, um in einer, vorzugsweise weg von der Abwurfstelle (26), beweglichen Gruppiereinheit (3) eine Gruppe (27) von Gegenständen zu bilden, wobei nachfolgend ein Verpacken der Gruppe (27) vorgesehen ist, **dadurch gekennzeichnet, dass** an der Abwurfstelle (26) die Gegenstände über eine sich an eine Horizontale anschließende, nach unten weisende Krümmung (29) geführt werden, dass die Gegenstände entweder mit relativ hoher horizontaler Abwurfgeschwindigkeit (V1) an der Abwurfstelle (26) über diese Krümmung (29) abgeworfen werden, um liegend auf der Gruppiereinheit (3) zu landen, oder mit relativ niedriger horizontaler Abwurfgeschwindigkeit (V2) abgeworfen zu werden, um durch die Krümmung (29) einen Drehimpuls zu erhalten und zunächst eine 90 Grad-Drehung um den eigenen Schwerpunkt um 90 Grad auszuführen, und um dann derart gedreht stehend auf der Gruppiereinheit (3) zu landen.

## Claims

1. An apparatus for grouping articles, in particular packages (12), with a conveying device (1) with a drive (2) for supplying the articles to a grouping unit (3), **characterized in that** at a level situated above the grouping unit (3) the conveying device (1) has a discharge station (26) for discharging the articles in succession onto the grouping unit (3), the grouping unit (3) has a drive (20) for moving the grouping unit (3) preferably away from the discharge station (26), the grouping unit (3) being movable in such a way that the articles arrive at the grouping unit (3) in succession in order to form a group (27) of articles there, and a control device (14) is provided which is connected to the two drives (2, 20) in order to move the grouping unit (3) further in each case by the amount of a horizontal extension (**sx**) of an article present there, so that the articles arrive at the grouping unit (3) adjacent to one another and thus form the group (27), and the drive (2) of the conveying device (1) is selectively actuable in such a way with respect to the conveying speed that the articles either are discharged at a relatively high horizontal discharge speed (**V1**) at the discharge station (26) by way of a downwardly directed curve (29) so as to arrive in the same orientation at the grouping unit (3), as their orientation on the conveying device (1) was, in particular horizontally, or are discharged at a relatively low horizontal discharge speed (**V2**) so as to perform, as a result of the curve (29), first a 90° turn about the individual centre of gravity through 90°, and so as then to arrive, turned in this way and in particular upright, on the grouping unit (3).

2. An apparatus according to Claim 1, **characterized in that** the conveying device (1) is a circulating conveyor belt which is deflected through 180° on a deflecting roller (16) at the discharge station (26).

3. An apparatus according to Claim 1 or Claim 2, **characterized in that** the grouping unit (3) contains a frame (15) which is movable in the horizontal direction and which preferably has a limit (6) at an end situated remote from the discharge station (26).

4. An apparatus according to Claim 3, **characterized in that** a further limit (7), which is preferably adjustable with respect to the other limit (6), is provided at the end of the frame (15) facing the discharge station (26).

5. An apparatus according to one of Claims 1 to 4, **characterized in that** a linear drive, preferably a linear motor, is provided as a drive (20) for the grouping unit (3).

6. An apparatus according to Claim 5, **characterized in that** the drive (20) contains a linear motor with a slide (8) movable along a guide (9), the frame (15) of the grouping unit (3) being connected to the slide (8).

7. An apparatus according to Claim 1, **characterized in that** a position detector (28) for detecting a discharge procedure is provided at the discharge station (26).

8. An apparatus according to Claim 1, Claim 2 or Claim 7, **characterized in that** the grouping unit (3) comprises two conveyor belts (23) which extend parallel to each other and which are driven in each case by means of a drive (19, 20), and a limit (6, 7) for limiting a group (28) is provided by way of a fastening means (21) on the conveyor belts (23) in each case.

9. An apparatus according to Claim 8, **characterized in that** the grouping unit (3) is followed by a further conveyor (13) arranged downstream in the conveying direction, the gap between the grouping unit (3) and the conveyor (13) being provided with a covering plate (22) over which the articles can be displaced.

10. A method of grouping articles, in particular packages (12), the articles being conveyed in succession lying in the horizontal direction to a discharge station (26), and being discharged there in the horizontal direction in order to form a group (27) of articles in a grouping unit (3) which is movable, preferably away from the discharge station (26), packaging of the group (27) subsequently being provided, **characterized in that** at the discharge station (26) the articles are guided over a downwardly directed curve (29) adjoining a horizontal line, the articles either are discharged at a relatively high horizontal discharge speed (**V1**) at the discharge station (26) by way of the said curve (29) so as to arrive horizontally at the grouping unit (3), or are discharged at a relatively low horizontal discharge speed (**V2**) so as to receive a rotational momentum as a result of the curve (29) and first to perform a 90° turn about the individual centre of gravity through 90°, and so as then to arrive, turned in this way and upright, at the grouping unit (3).

## Revendications

1. Dispositif pour grouper des objets, en particulier des emballages (12), avec un dispositif de transport (1) comprenant un système d'entraînement (2) pour amener les objets à une unité de groupage (3), **caractérisé en ce que** le dispositif de transport (1) comprend à une hauteur se trouvant au-dessus de l'unité de groupage (3) un point de déversement (26) pour le déversement successif des objets sur l'unité de groupage (3), **en ce que** l'unité de groupage (3) comprend un système d'entraînement (20) pour assurer le déplacement de l'unité de groupage (3), de préférence en l'éloignant du point de déversement (26), l'unité de groupage (3) étant déplaçable de telle façon que les objets arrivent les uns après les autres sur l'unité de groupage (3) pour former à cet endroit un groupe d'objets (27), **en ce qu'**il est prévu un dispositif de commande (14) qui est relié aux deux systèmes d'entraînement (2, 20) pour déplacer l'unité de groupage (3) respectivement de la valeur d'une extension horizontale d'objet (sx) existant à cet endroit, de sorte que les objets arrivent les uns à côté des autres sur l'unité de groupage (3) en formant ainsi le groupe, et **en ce que** le système d'entraînement (2) du dispositif de transport (1) peut au choix être activé de telle façon en ce qui concerne la vitesse de transport qu'au point de déversement (26) les objets soient déversés par l'intermédiaire d'un coude (29) dirigé vers le bas soit avec une vitesse horizontale de déversement (V1) relativement élevée pour arriver sur l'unité de groupage (3) avec la même orientation que celle qui était la leur sur le dispositif de transport (1), en particulier en position couchée, soit avec une vitesse horizontale de déversement (V2) relativement faible pour, du fait du coude (29), effectuer d'abord une rotation de 90 degrés autour de leur propre centre de gravité et pour arriver ensuite dans cette position de rotation, et en particulier en position debout, sur l'unité de groupage (3).

2. Dispositif selon la revendication 1, **caractérisé en ce que** le dispositif de transport (1) est une bande de transport se déplaçant dans le sens circulaire qui fait l'objet d'un renvoi de 180 degrés au point de déversement (26) au moyen d'un rouleau de renvoi (16).

3. Dispositif selon la revendication 1 ou la revendication 2, **caractérisé en ce que** l'unité de groupage (3) comprend un cadre (15) qui peut être déplacé dans le sens horizontal et qui comprend un élément de limitation (6), de préférence à une extrémité éloignée du point de déversement (26).

4. Dispositif selon la revendication 3, **caractérisé en ce qu'**à l'extrémité du cadre 15 dirigée vers le point de déversement (26) est prévu un élément de limitation (7) supplémentaire qui peut être déplacé de préférence en direction de l'autre élément de limitation (6).

5. Dispositif selon l'une quelconque des revendications 1 à 4, **caractérisé en ce qu'**un système d'entraînement linéaire, de préférence un moteur linéaire, est prévu comme système d'entraînement (20) pour l'unité de groupage (3).

6. Dispositif selon la revendication 5, **caractérisé en ce que** le système d'entraînement (20) comprend un moteur linéaire avec un chariot (8) déplaçable le long d'un guide (9), le cadre (15) de l'unité de groupage (3) étant relié avec le chariot (8).

7. Dispositif selon la revendication 1, **caractérisé en ce qu'**au point de déversement (26) est prévu un détecteur de position (28) servant à détecter un processus de déversement.

8. Dispositif selon la revendication 1, la revendication 2 ou la revendication 7, **caractérisé en ce que** l'unité de groupage (3) comprend deux bandes de transport (23) s'étendant parallèlement l'une par rapport à l'autre et qui sont entraînées respectivement à l'aide d'un système d'entraînement (19, 20) et **en ce que**, pour limiter un groupe (27), il est prévu respectivement un élément de limitation (6, 7) réalisé au moyen d'une fixation (21) sur les bandes de transport (23).

9. Dispositif selon la revendication 8, **caractérisé en ce que** l'unité de groupage (3) est suivie en direction du transport d'un autre transporteur (13), la fente entre l'unité de groupage (3) et le transporteur (13) étant munie d'une tôle de recouvrement (22) pardessus laquelle peuvent être glissés les objets.

10. Procédé pour grouper des objets, en particulier des emballages (12), les objets étant transportés dans le sens horizontal en position couchée les uns après les autres à un point de déversement (26) en étant déversés à cet endroit en direction horizontale pour former un groupe d'objets (27) dans une unité de groupage (3) pouvant être déplacée de préférence en l'éloignant du point de déversement (26), alors qu'il est prévu d'emballer ensuite le groupe (27), **caractérisé en ce qu'**au point de déversement (26) les objets sont guidés par l'intermédiaire d'un coude (29) venant à la suite dans le sens horizontal et dirigé vers le bas et **en ce qu'**au point de déversement (26) les objets sont déversés par l'intermédiaire de ce coude (29) soit avec une vitesse horizontale de déversement (V1) relativement élevée pour arriver en position couchée sur l'unité de groupage (3) soit avec une vitesse horizontale de déversement (V2) relativement faible pour, du fait du coude (29), recevoir une impulsion de rotation et effectuer d'abord une rotation de 90 degrés autour de leur propre centre de gravité pour arriver ensuite dans cette position de rotation et en position debout sur l'unité de groupage (3).
